Europäisches Patentamt

European Patent Office

Office européen des brevets

(19)

(11) EP 1 071 637 B1

(12) EUROPÄISCHE PATENTSCHRIFT

(45) Veröffentlichungstag und Bekanntmachung des
Hinweises auf die Patenterteilung:
**12.12.2001 Patentblatt 2001/50**

(51) Int Cl.7: **C02F 3/30**

(86) Internationale Anmeldenummer:
**PCT/EP98/06882**

(21) Anmeldenummer: **98954467.1**

(22) Anmeldetag: **30.10.1998**

(87) Internationale Veröffentlichungsnummer:
**WO 99/23039 (14.05.1999 Gazette 1999/19)**

(54) **VERFAHREN ZUR BEHANDLUNG VON MIT AMMONIUM HOCHBELASTETEN
PROZESSABWÄSSERN AUF DEM ABWASSERGEBIET**

METHOD FOR TREATING PROCESS WASTE WATERS HIGHLY CHARGED WITH AMMONIUM IN
WASTE WATER SYSTEMS

PROCEDE POUR LE TRAITEMENT SUR SITE DES EAUX RESIDUAIRES DE FABRICATION
FORTEMENT CHARGEES EN AMMONIUM

(84) Benannte Vertragsstaaten:
**AT BE CH DE DK ES FR GB GR IT LI NL SE**
Benannte Erstreckungsstaaten:
**SI**

(30) Priorität: **30.10.1997 DE 19748000**
           **24.06.1998 DE 19828175**

(43) Veröffentlichungstag der Anmeldung:
**31.01.2001 Patentblatt 2001/05**

(73) Patentinhaber: **SÜD-CHEMIE AG**
**80333 München (DE)**

(72) Erfinder: **HÖGL, Maximilian**
**D-84034 Landshut (DE)**

(74) Vertreter: **Reitzner, Bruno, Dr. et al**
**Splanemann Reitzner**
**Baronetzky Westendorp**
**Patentanwälte**
**Rumfordstrasse 7**
**80469 München (DE)**

(56) Entgegenhaltungen:
**EP-A- 0 383 674       DE-A- 3 724 027**
**DE-A- 4 133 954       DE-A- 19 631 796**
**US-A- 5 286 385**

**Beschreibung**

Die Erfindung betrifft ein Verfahren zur Behandlung von mit Ammonium hochbelasteten Prozeßabwässern auf dem Abwassergebiet. Unter "Ammonium" versteht man erfindungsgemäß sowohl Ammoniumverbindungen als auch Ammoniak.

Mit Ammonium belastete Abwässer, einschließlich hochbelastete Prozeßabwässer, können auf verschiedene Weise gereinigt werden. Bei der physikalischen Reinigung wird der pH-Wert durch Zusatz von Lauge erhöht, worauf Ammoniak durch Strippen mit Dampf oder mit einem Gas entfernt und durch Kondensation wiedergewonnen wird. Der Erlös aus dem wiedergewonnenen Ammoniak ist, gemessen an den hohen Investitionskosten, sehr gering, und außerdem können Abwässer mit weniger als 100 mg $NH_4$-Stickstoff ($NH_4$-N) je Liter auf diese Weise nicht gereinigt werden.

Das chemische Verfahren beruht auf der Fällung von Magnesiumammoniumphosphat. Hierbei werden dem Abwasser Magnesiumsalze und Phosphate zugesetzt, wobei bei einem bestimmten pH-Wert Magnesiumammoniumphosphat ausfällt. Das Magnesiumammoniumphosphat kann durch Erwärmen wieder aufbereitet werden, wobei Magnesiumhydrogenphosphat und Ammoniak entsteht, der durch Strippen entfernt werden kann. Das Magnesiumhydrogenphosphat kann dann dem Abwasser wieder als Fällungsmittel zugesetzt werden. Dieses Verfahren ist jedoch sehr kostenintensiv.

Ein weiteres, kostengünstigeres biologisches Verfahren umfaßt die Behandlung der Abwässer mit nitrifizierenden Mikroorganismen (Nitrifikanten), wobei die Nitrifikanten auf einem festen Trägerbett angesiedelt werden. Das Abwasser wird belüftet, wobei die Nitrifikanten den Ammoniumstickstoff zu Nitrit (Nitrosomonas) bzw. zu Nitrat (Nitrobacter) oxidieren.

Das feste Trägerbett enthielt früher im allgemeinen Lava, während in neuerer Zeit im allgemeinen Stäbe, Kugeln oder Fäden aus Kunststoffen verwendet werden. Diese Materialien schaffen eine Besiedelungsfläche für die Nitrifikanten.

Aus dem Buch "Stickstoffrückbelastung - Stand der Technik 1996/1997 - Zukünftige Entwicklungen" - von J.St. Kollbach und M. Grömping, TK-Verlag Karl Thomé-Kozmiensky ist unter dem Fachbeitrag Nr. 20 von J. Mihopulos "Kostensenkende Strategien für Kläranlagen: Separate Trübwasserbehandlung" ein dreistufiger Wirbelbettreaktor angegeben, in welchem die Biomasse an eine Trägersubstanz (Basalt) angesiedelt ist. Diese Substanz wird mit einer Rückführung in Suspension gehalten. Die Trägersubstanz ist jedoch ziemlich grobkörnig. Außerdem liegt ihre spezifische Oberfläche unterhalb von 10 $m^2$/g. Bei einem Belüftungsausfall lagert sich die Trägersubstanz ab und führt dadurch zu Verstopfungen und zum Absterben des Biofilms.

Aus der Literaturstelle "Korrespondenz Abwasser", 12, 1994, S. 2261-2268, ist ein Verfahren zur Stickstoffentfernung in Kläranlagen mit biologischer Reinigungsstufe bekannt, wobei stark mit Ammonium belastete Teilströme der Schlammbehandlung zur Anzucht von Nitrifikanten genutzt werden. Die gewonnene aktive Biomasse wird zur Förderung der Nitrifikation in den nachfolgenden Reinigungsstufen verwendet. Der Einsatz von Nitrifikanten in Gegenwart von Aluminium- und Eisenhydroxid soll zu einer deutlichen Stickstoffeliminierung im behandelten Abwasser während der Nitrifikationsphase führen. Auch die zur Anzucht der Nitrifikanten verwendeten Teilströme sollen bereits im erheblichen Maße (67 %) von ihrer Stickstoffbelastung befreit werden. Es finden sich keine Angaben über die chemischen und physikalischen Eigenschaften der verwendeten Metallhydroxide. Außerdem werden die mit den Nitrifikanten beladenen Metallhydroxide mit dem Schlamm ausgetragen und können zu einer Umweltbelastung führen, da sie leicht die entsprechenden dreiwertigen Kationen abgeben.

In Patent Abstract of Japan, Vol. 8, Nr. 266 (C-255), 6. Dezember 1980; und JP-A-59 142 897 (ATAKA KOGYO K.K) ist ein Verfahren zu Behandlung von ammoniumhaltigem Abwasser mit nitrifizierenden Mikroorganismen in Anwesenheit von Vermiculit als Trägermaterial beschrieben.

Die EP-A-0 383 674 betrifft ein Verfahren zur biologischen Abwasserreinigung, wobei ein Granulat (feiner Sand) als Trägermaterial in einer Suspension verwendet wird.

Die DE-A-41 33 954 betrifft ein Verfahren zur biologischen Entfernung von Phosphor und Stickstoff aus Abwasser, wobei aufschwimmende hohlzylindrische Formkörper, die Aktivkohle enthalten, als Trägermaterial verwendet werden.

Der Erfindung liegt die Aufgabe zugrunde, mit Ammonium hochbelastete Prozeßabwässer auf dem Abwassergebiet unter Verwendung von Trägersubstanzen zu behandeln, die bei geringen Investitions- und Betriebskosten ein einwandfreies Arbeiten der Nitrifikanten ermöglichen und eine Freisetzung von mehrwertigen Kationen aus dem abgetrennten Schlamm weitgehend verhindern.

Diese Aufgabe wird gelöst durch ein Verfahren zur Behandlung von mit Ammonium hochbelasteten Prozeßabwässern auf dem Abwassergebiet gemäß Anspruch 1.

Die spezifische Oberfläche wird nach der BET-Methode (Einpunktmethode mit Stickstoff gemäß DIN 66 131) ermittelt.

Nach einer bevorzugten Ausführungsform setzt man eine natürliche silicatische Trägersubstanz mit einer Teilchengröße von 95 Gem.-% < 150 μm ein. Auf diese Weise wird gewährleistet, daß die Trägersustanz auch ohne aufwendige Rühreinrichtungen in Suspension bleibt. Natürliche silicatische Trägersubstanzen neigen im Gegensatz zu synthetischen Trägersubstanzen weniger dazu, lösliche Schadstoffe abzugeben, da sie über geologische Zeiträume einem natürlichem Auslaugungsprozeß unterworfen waren. Sie sind somit umweltverträglicher als synthetische silicatische Trägersubstanzen.

Die erfindungsgemäß verwendete silicatische Trägersubstanz ergibt eine hohe Besiedelungsfläche für die Nitrifikanten. Die hohe Besiedelungsfläche ermöglicht es, Abwässer mit hohen $NH_4$-Konzentrationen zu behandeln, die nach dem bekannten biologischen Verfahren nicht mehr behandelt werden können. Vorzugsweise setzt man Prozeßabwässer mit einem $NH_4$-N-Gehalt von etwa 200 bis 2000 mg/Liter, insbesondere von etwa 400 bis 1600 mg/Liter, ein.

Die silicatische Trägersubstanz wird im allgemeinen in Mengen von etwa 5 bis 50 g/Liter, vorzugsweise von etwa 15 g/Liter eingesetzt. Wichtig ist auch, daß das spezifische Gewicht der Trägersubstanz über 1,5 $g/cm^3$ liegt, damit die Trägersubstanz bei der Belüftung nicht flotiert.

Vorzugsweise hat die silicatische Trägersubstanz einen Oberflächen-pH-Wert von etwa 6 - 9. Dieser wird dadurch bestimmt, daß eine 10 Gew.-%ige Suspension der silicatischen Trägersubstanz in Wasser 15 min. gerührt wird. Der pH-Wert wird dann in der abfiltrierten Lösung mit Hilfe einer Glaselektrode bestimmt. Es wurde überraschenderweise gefunden, daß eine silicatische Trägersubstanz mit einem Oberflächen-pH-Wert außerhalb des angegebenen Bereichs eine geringere Besiedlungsdichte für die Nitrifikanten hat und daß die Besiedlungsdichte auch nicht nennenswert erhöht wird, wenn durch zusatz von Säure bzw. Lauge in der Suspension der silicatischen Trägersubstanz ein pH-Wert innerhalb des angegebenen Bereichs eingestellt wird.

Vorzugsweise hat die silicatische Trägersubstanz eine. Kationenumtauschfähigkeit (IUF) von etwa 40 bis 100 mVal/100g, insbesondere 50 bis 80 mVal/100g. Die Kationenumtauschfähigkeit wird wie folgt ermittelt:

Die getrocknete silicatische Trägersubstanz wird mit einem großen Überschuß an wäßriger $NH_4Cl$-Lösung eine Stunde unter Rückfluß zur Reaktion gebracht. Nach einer Standzeit von 16. Stunden bei Raumtemperatur wird filtriert, der Filterkuchen gewaschen, getrocknet und gemahlen, und der $NH_4$-Gehalt in der Trägersubstanz wird nach Kjeldahl bestimmt.

Außderdem ist die silicatische Trägersubstanz auch hydrophil , d.h. sie hat ein Quellvolumen von 5 bis 80 ml/2g, vorzugsweise von 10 bis 20 ml/2g. Das Quellvolumen wird wie folgt bestimmt:

Ein kalibrierter 100 ml-Meßzylinder wird mit 100 ml dest. Wasser gefüllt. 2,0 g der zu messenden Substanz werden in Portionen von 0,1 bis 0,2 g langsam auf der Wasseroberfläche gegeben. Nach dem Absinken das Materials wird das nächste Quantum aufgegeben. Nach Beendigung der Zugabe wartet man 1 Stunde und liest dann das Volumen der aufgequollenen Substanz in ml/2g ab.

Durch die verhältnismäßig geringe Teilchengröße und das Quellvermögen wird gewährleistet, daß die Trägersubstanz homogen in der Schwebe bleibt. Falls das Gemisch aus Abwasser und silicatischer Trägersubstanz zum Schäumen neigt, können Entschäumer zugesetzt werden.

Vorzugsweise verwendet man als silicatische Trägersubstanz Tonminerale, insbesondere smektitische Tonminerale, wie Bentonit, Vermiculit, Chlorit, Beidellit, Hectorit, Nontronit und Illit. Besonders bevorzugt wird als smektitisches Tonmineral Bentonit (Hauptmineral Montmorillonit) verwendet, der neben seiner Funktion als Besiedelungsfläche auch Ammoniak und $NH_4^+$ adsorbiert (Im letzten Fall aufgrund der Ionenumtauschfähigkeit).

Andere brauchbare silicatische Trägersubstanzen sind u.a. Kaolin- und Serpentinminerale (wie Kaolinit, Dickit, Nakrit, Halloysit, Antigorit), Palygorskit, Sepiolith, Pyrophyllit, Talk sowie Zeolithe.

Die silicatische Trägersubstanz kann in Mengen von etwa 10 bis 30 g/Liter, vorzugsweise 15 g/Liter verwendet werden. Bei weniger als 10 g/Liter wird nicht der gesamte $NH_4$-Stickstoff abgebaut. Bei mehr als 30 g/Liter ist andererseits kein wesentlicher Vorteil mehr feststellbar.

Nach einer alternativen Ausführungsform des erfindungsgemäßen Verfahrens wird anstelle der silicatischen Trägersubstanz ein feinteiliges Kohlenstoffhaltiges Material verwendet. Auch hier wird das optimale Wachstum und einwandfreie Arbeiten der Nitrifikanten durch Bereitstellung einer geeigneten Oberfläche mit einem geeigneten Oberflächen-pH-Wert zwischen 6 und 9 gewährleistet.

Der Oberflächen-pH-Wert beträgt vorzugsweise 6,5 bis 8, und kann, falls das Material nicht ursprünglich diesen Oberflächen-pH-Wert aufweist, dadurch erhalten werden, daß beispielsweise ein zunächst basisches kohlenstoffhaltiges Material mit einem sauren Abwasser in Berührung gebracht wird.

Insbesondere können Aktivkohle, Braunkohlenkoks, Koksstaub, Anthrazit, Graphit und/oder Ruß als kohlenstoffhaltiges Material verwendet werden. Die vorzugsweise verwendeten Materialien weisen alle eine hohe spezifische Oberfläche von > 20 $m^2/g$, vorzugsweise von mehr als 30 bis 50 $m^2/g$ auf. Es wird angenommen, daß sich die große spezifische Oberfläche positiv auf das Wachstum und das einwandfreie Arbeiten der Nitrifikanten auswirkt, beispielsweise durch Ad- bzw. Desorption bestimmter Stoffwechselprodukte.

Vorzugsweise verwendet man ein kohlenstoffhaltiges Material mit einer Teilchengröße von 95 Gew.-% < 400 μm. Dieser Bereich ist etwas größer als der bei der Verwendung von silicatischem Trägermaterial bevorzugte, was dadurch ermöglicht wird, daß die kohlenstoffhaltigen Materialien spezifisch leichter als silicatische Trägermaterialien sind und sich daher nicht so schnell absetzen. Ruße haben üblicherweise eine Teilchengröße von 5 bis 500 nm. Die Teilchengrößen von Graphit und Anthrazit liegen ebenfalls im Nanometerbereich.

Die kohlenstoffhaltige Trägersubstanz kann in Mengen von etwa 10 bis 30 g/l, vorzugsweise 15 g/l, verwendet werden. Bei weniger als 10 g/l wird nicht der gesamte $NH_4$-Stickstoff abgebaut. Bei mehr als 30 g/l ist andererseits kein wesentlicher Vorteil mehr feststellbar.

Vorteilhaft ist, daß bei der Verwendung der vorstehend genannten kohlenstoffhaltigen Materialien bei der Verbrennung des aus der Abwasserbehandlung stammenden Klärschlamms keine Ascherückstände gebildet werden.

Wie vorstehend erwähnt, wird ein Oberflächen-pH-Wert der kohlenstoffhaltigen Trägermaterialien von 6 bis 9, insbesondere von 6 bis 8,5, bevorzugt. Bei Verwendung von Anthrazit und/oder Graphit, die von sich aus pH-neutral sind, muß daher keine Behandlung vorgenommen werden, um den gewünschten Oberflächen-pH-Wert einzustellen. Aktivkohle und Braunkohlenkoks sowie Koksstaub sind allerdings basisch, und werden daher durch (Vor-)Behandlung mit Säure auf den gewünschten Oberflächen-pH-Wert gebracht. Dies kann entweder durch Zugabe von Säure bzw. Säurelösungen, oder durch Vorbehandlung mit einem sauren Abwasser geschehen.

Das erfindungsgemäße Verfahren wird mit ammoniak- und ammoniumhaltigen Prozeßabwässern durchgeführt. Das erfindungsgemäße Verfahren wird also nicht im Rahmen einer normalen biologischen Klärstufe angewendet; es handelt sich vielmehr um ein dezentrales Verfahren zur Behandlung von hochbelasteten Abwässern.

Als Abwässer verwendet man vorzugsweise Teilströme aus der Schlammbehandlung und/oder Überstandswasser (Trübwasser) aus der Schlammfaulung und/oder Deponiesickerwässer. Durch die Bildung von salpetriger Säure bzw. von Salpetersäure sinkt der pH-Wert ab, und die Reaktion kommt zum Stillstand. Vorzugsweise stellt man daher die pH-Werte bei der Nitrifikation durch Zusatz von Alkali auf etwa 6,5 bis 8,5, insbesondere auf etwa 6,8 bis 7,2 ein. Wenn keine pH-Regulierung durchgeführt wird, beträgt die Nitrifikationsleistung nur etwa 40 bis 60%. Unterhalb eines pH-Wertes von 5,9 findet keine Reaktion mehr statt. Durch Zusatz von Alkali wird die Nitrifikationsleistung auf über 90% erhöht. Bei einem pH-Wert von mehr als 9 kommt die Reaktion ebenfalls zum Stillstand.

Um eine schnelle Besiedelung der Trägersubstanz mit den Nitrifikanten zu ereichen, setzt man den Abwässern eine zuvor mit den Nitrifikanten beimpfte Suspension der Trägersubstanzen zu, wobei man als Nitrifikanten vorzugsweise Bakterien verwendet, die Ammoniak zu Nitrit oxidieren. In geringerem Umfang treten auch Mikroorganismen auf, die Ammoniak zu Nitrat oxidieren.

Mit Hilfe des erfindungsgemäßen Verfahrens kann nach der anschließenden Denitrifikation mit denitrifizierenden MikroOrganismen (Denitrifikanten) eine Stickstoff-Rückbelastung vermieden werden.

Die Nitrifikation erfolgt unter aeroben Bedingungen, vorzugsweise indem man den Abwässern ein sauerstoffhaltiges Gas zuführt. Im allgemeinen soll die Sauerstoffkonzentration mindestens 2 mg/Liter betragen. Unterhalb dieser Konzentration sinkt die Nitrifikationsleistung ab.

Die nitrifizierten Abwässer können aufgrund der hohen Nitritgehalte nicht ohne weiteres in den Vorfluter eingeleitet werden. Es ist daher im allgemeinen erforderlich, eine Denitrifikation nachzuschalten, was in einer vorhandenen Anlage geschehen kann. Die Denitrifikanten nehmen den Sauerstoff zunächst aus dem Abwasser auf, bis dieses anoxisch wird; dann nehmen sie den Sauerstoff aus dem Nitrit bzw. aus dem Nitrat auf, wobei elementarer Stickstoff freigesetzt wird.

Es wurde gefunden, daß man die Nitrifikation optimieren kann, wenn man diese bei einer Raumbelastung von etwa 0,5 bis 2,5, vorzugsweise von 1,9 bis 1,5 kg $NH_4$-N/m³ Abwasser und Tag, durchführt. Das Verfahren kann auch bei etwas kleineren Raumbelastungen durchgeführt werden, wenn beispielsweise in Folge von Betriebsschwankungen der $NH_4$-N-Gehalt abnimmt.

Diese hohe Raumbelastung ermöglicht die Durchführung des Verfahrens in einem verhältnismäßig kleinen Belebungsbecken, wodurch sich das Verfahren von den Verfahren, die in einer normalen biologischen Klärstufe angewendet werden, grundsätzlich unterscheidet.

Ferner hat sich herausgestellt, daß man bei Abwässern mit einer hohen organischen Kohlenstofffracht, bestimmt als chemischer Sauerstoffbedarf (CSB) die Kohlenstofffracht vor der Nitrifikationsstufe auf etwa 300 bis 1000, vorzugsweise auf etwa 300 bis 500 mg/Liter herabsetzt. Bei einer hohen Kohlenstofffracht wird das Wachstum der C-abbauenden Mikroorganismen (d.h. der heterotrophen Bakterien) gefördert, während das Wachstum der Nitrifikanten unterdrückt bzw. verlangsamt wird, wodurch die Nitrifikationsleistung herabgesetzt wird.

Die Herabsetzung der organischen Kohlenstofffracht kann nach an sich bekannten Verfahren erfolgen, beispielsweise durch Zusatz von Flockungsmitteln, wie einer Lösung von Salzen mehrwertiger Metalle, z.B. von Eisen- und Aluminiumsalzen. Diese Salze können in einer Menge im Bereich von etwa 0,5 g/Liter dem Abwasser zugesetzt werden. Hierbei flocken die kolloidalen kohlenstoffhaltigen Verbindungen aus und lassen sich leicht abtrennen.

Weiterhin kann die organische Kohlenstofffracht durch eine vorgeschaltete biologische Klärung mit Schlammabscheidung reduziert werden, wobei der abgeschiedene Schlamm in einem Faulturm geleitet wird.

Ferner kann die organische Kohlenstofffracht oxidativ, z.B. durch Behandlung mit Ozon, reduziert werden. Dieses Verfahren wird insbesondere bei gelösten Kohlenstoffverbindungen angewendet. Ferner können die gelösten Kohlenstoffverbindungen auch durch Adsorption entfernt werden. Dies gilt auch für Kohlenstoffverbindungen mit Substituenten, die die nachfolgende Nitrifikation beeinträchtigen können, z.B. Phenole und Halogenkohlenwasserstoffe.

Weiterhin wurden Versuche über die Optimierung des $NH_4$-Stickstoffgehalts vorgenommen. Hierbei wurde gefunden, daß man den $NH_4$-Stickstoffgehalt vor der Nitrifikation auf einen Maximalwert von etwa 1200, vorzugsweise von etwa 700 mg/Liter begrenzen sollte. Bei diesen $NH_4$-Stickstoffgehalten finden die Nitrifikanten ideale Wachstumsbedingungen. Der $NH_4$-Stickstoffgehalt kann z.B. durch Verdünnen des Abwassers mit geklärtem Abwasser erfolgen.

Die vorstehend beschriebenen Verbesserungen (Raumbelastung, Herabsetzung der Kohlenstofffracht und Begrenzung des $NH_4$-Stickstoffgehalts) können einzeln oder in Kombination vorgenommen werden.

Die Erfindung wird durch die nachstehenden Beispiele erläutert.

Beispiele

Beispiel 1

In einer Belebungsanlage mit einem Volumen von 160 $m^3$ und einer Belüftungseinrichtung sowie mit angeschlossenem Absetzbecken (60 $m^3$) mit Schlammrückführung wurde ein Teilstrom aus der Schlammbehandlung (200 $m^3$/d; Filtrat aus einer Kammerfilterpresse mit Kalkkonditionierung) mit einem $NH_4$-N-Gehalt von 1040 mg/Liter, einem pH-Wert von 12,5 und einem CSB-Wert von 400 mg/Liter mit 2400 kg Calciumbentonit aus Moosburg (Terrana $^R$, Handelsbezeichnung der Firma Süd-Chemie AG) behandelt (spezifische Oberfläche 60 $m^2$/g, Teilchengröße 95 Gew.% < 150 μm, Kationenumtauschfähigkeit 63 mVal/100g, Quellvolumen 12 ml/2g, Oberflächen-pH-Wert 8,0). Der Bentonit wurde in Wasser suspendiert (15 g/Liter) und vor dem Vermischen mit dem Abwasser mit Nitrifikanten aus belebtem Schlamm beimpft. Der so vorbehandelte Bentonit wurde in dem zu behandelnden Abwasser suspendiert, wobei in das Gemisch aus Abwasser und Bentonit Luft eingeblasen wurde. Hierbei sank der pH-Wert allmählich ab. Durch Zugabe von Natronlauge über eine pH-gesteuerte Dosieranlage wurde der pH-Wert auf 7,0 ± 0,2 eingestellt. Nach 4 Tagen bei einer Temperatur von etwa 20°C war der $NH_4$-N-Gehalt auf etwa 82 mg/Liter abgesunken (Nitrifikationsleistung etwa 92%). Der Nitrit-N-Gehalt betrug etwa 816 mg/Liter, der Nitrat-N-Gehalt etwa 93 mg/Liter. Aus dem $NH_4$-N-Gehalt, dem Beckenvolumen und der pro Tag durch das Belebungsbecken geleiteten Teilstrommenge ergibt sich entsprechend der nachstehenden Gleichung

$$\frac{1.04 \times 200 \text{ kg}}{160 \text{ m}^3 \text{ x d}}$$

eine sogenannte Raumbelastung von etwa 1,3 kg $NH_4$-N pro $m^3$ Abwasser und Tag.

Das so behandelte Abwasser wurde dann in einer der biologischen Stufe einer bestehenden Anlage vorgeschalteten Denitrifikationsstufe (100 $m^3$) mit externer Kohlenstoffdosierung denitrifiziert, wobei der Nitrit/Nitrat-Stickstoffgehalt auf <1 mg/Liter herabgesetzt wurde.

Beispiel 2

Beispiel 1 wurde mit der Abweichung wiederholt, daß der Teilstrom aus der Schlammbehandlung mit einem CSB von 1200 mg/Liter mit 0,5 g pro Liter einer Mischung aus Eisen- und Aluminiumchlorid in gelöster Form (Südflock K2®; Handelsbezeichnung der Firma Süd-Chemie AG) in einem Vorklärbecken behandelt wurde. Das ausgeflockte Material wurde durch Absetzen abgetrennt, und der Schlamm wurde in einen Faulturm geleitet. Der Überstand, der einen CSB-Wert von 500 mg/Liter hatte, wurde in das Belebungsbecken von Beispiel 1 geleitet und wie in diesem Beispiel beschrieben, weiterbehandelt.

Beispiel 3

Beispiel 1 wurde mit der Abweichung wiederholt, daß die $NH_4$-N-Konzentration 980 mg/Liter betrug und als Trägermaterial Anthrazit verwendet wurde (spezifische Oberfläche ca. 30 - 40 $m^3$/g, Teilchengröße: 95 Gew.-% < 200 μm, Oberflächen-pH-Wert = 7,8).

Der Anthrazit wurde in Wasser suspendiert (15 g/l) und vor dem Vermischen mit dem Abwasser mit Nitrifikanten aus belebtem Schlamm beimpft. Der so vorbehandelte Anthrazit wurde in dem zu behandelnden Abwasser suspendiert, wobei in das Gemisch aus Abwasser und Anthrazit Luft eingeblasen wurde. Hierbei sank der pH-Wert allmählich ab. Durch Zugabe von Natronlauge über eine pH-gesteuerte Dosieranlage wurde der pH-Wert auf 7,0 ± 0,2 eingestellt.

Nach vier Tagen bei einer Temperatur von etwa 20°C war der $NH_4$-Gehalt auf etwa 87 mg/Liter abgesunken (Nitrifikationsleistung etwa 91%). Der Nitrit-N-Gehalt betrug etwa 830 mg/Liter, der Nitrat-N-Gehalt etwa 89 mg/Liter. Aus dem $NH_4$-N-Gehalt, dem Beckenvolumen und der pro Tag durch das Belebungsbecken geleiteten Teilstrommenge ergibt sich entsprechend der nachstehenden Gleichung

$$\frac{0.98 \times 200 \text{ kg}}{160 \text{ m}^3 \text{ * d}}$$

eine sogenannte Raumbelastung von etwa 1,2 kg $NH_4$-

N pro m$^3$ Abwasser und Tag.

Das so behandelte Abwasser wurde dann in einer der biologischen Stufe einer bestehenden Anlage vorgeschalteten Denitrifikationsstufe (100 m$^3$) mit externer Kohlenstoffdosierung denitrifiziert, wobei der Nitrit/Nitrat-Stickstoffgehalt auf <1 mg/Liter herabgesetzt wurde.

**Patentansprüche**

1. Verfahren zur Behandlung von mit Ammonium hochbelasteten Prozessabwässern auf dem Abwassergebiet, durch Behandlung der Abwässer mit nitrifizierenden Mikroorganismen (Nitrifikanten) in Gegenwart einer suspendierten Trägersubstanz, wobei man den Abwässern eine silicatische oder feinteilige kohlenstoffhaltige Trägersubstanz mit einer spezifischen Oberfläche von > 20 m$^2$/g, vorzugsweise von > 50 m$^2$/g, zusetzt und darin suspendiert, und die nitrifizierten Abwässer gegebenenfalls einer Denitrifikation mit denitrifizierenden Mikroorganismen (Denitrifikanten) unterzieht, und wobei die silicatische Trägersubstanz ein Quellvolumen von 5 bis 80 ml/2g, und die feinteilige kohlenstoffhaltige Trägersubstanz einen Oberflächen-pH-Wert von etwa 6 bis 9 aufweist.

2. Verfahren nach Anspruch 1, **dadurch gekennzeichnet, dass** man eine natürliche silicatische Trägersubstanz mit einer Teilchengröße von 95 Gew.-% < 150 μm einsetzt.

3. Verfahren nach Anspruch 1 oder 2, **dadurch gekennzeichnet, dass** man Prozessabwässer mit einem NH$_4$-Stickstoff-Gehalt von etwa 200 bis 2000 mg/Liter, vorzugsweise von etwa 400 bis 1600 mg/Liter einsetzt.

4. Verfahren nach einem der Ansprüche 1 bis 3, **dadurch gekennzeichnet, dass** man als Abwässer Teilströme aus der Schlammbehandlung und/oder Überstandswasser (Trübwasser) aus der Schlammbehandlung und/oder Deponiesickerwässer einsetzt.

5. Verfahren nach einer der Ansprüche 1 bis 4, **dadurch gekennzeichnet, dass** man den Abwässern eine zuvor mit Nitrifikanten beimpfte Suspension der silicatischen Trägersubstanz zusetzt.

6. Verfahren nach einem der Ansprüche 1 bis 5, **dadurch gekennzeichnet, dass** man die Denitrifikation unter anoxischen Bedingungen, gegebenenfalls unter Zufuhr einer Kohlenstoffquelle, durchführt.

7. Verfahren nach einem der Ansprüche 1 bis 6, **da-** durch gekennzeichnet, dass man als Nitrifikanten ammoniumoxidierende Bakterien verwendet.

8. Verfahren nach einem der Ansprüche 1 bis 7, **dadurch gekennzeichnet, dass** man die silicatische Trägersubstanz in Mengen von etwa 5 bis 50 g/Liter, vorzugsweise von etwa 15 g/Liter, einsetzt.

9. Verfahren nach einem der Ansprüche 1 bis 8, **dadurch gekennzeichnet, dass** man eine silicatische Trägersubstanz mit einem Oberflächen-pH-Wert von etwa 6 bis 9 einsetzt.

10. Verfahren nach einem der Ansprüche 1 bis 9, **dadurch gekennzeichnet, dass** die silicatische Trägersubstanz eine Kationenumtauschfähigkeit (IUF) von etwa 40 bis 100 mVal/100 g, vorzugsweise von etwa 50 bis 80 mVal/100 g hat.

11. Verfahren nach einem der Ansprüche 1 bis 10, **dadurch gekennzeichnet, dass** die silicatische Trägersubstanz ein Quellvolumen von 10 bis 20 ml/2g hat.

12. Verfahren nach einem der Ansprüche 1 bis 11, **dadurch gekennzeichnet, dass** man als silicatische Trägersubstanz Tonminerale verwendet.

13. Verfahren nach Anspruch 12, **dadurch gekennzeichnet, dass** man als Tonminerale smektitische Tonminerale, insbesondere Bentonit verwendet.

14. Verfahren nach einem der Ansprüche 1 bis 13, **dadurch gekennzeichnet, dass** man die pH-Werte bei der Nitrifikation durch Zusatz von Alkali auf etwa 6,5 bis 8,5, vorzugsweise auf etwa 6,8 bis 7,2 einstellt.

15. Verfahren nach einem der Ansprüche 1 bis 14, **dadurch gekennzeichnet, dass** man die silicatische Trägersubstanz in Mengen von etwa 6 bis 15 kg, vorzugsweise von etwa 7,5 bis 12 kg je kg Stickstoff (Gesamtstickstoff) im Abwasser zusetzt.

16. Verfahren nach einem der Ansprüche 1 bis 15, **dadurch gekennzeichnet, dass** man die Nitrifikation unter aeroben Bedingungen durchführt, vorzugsweise indem man den Abwässern ein sauerstoffhaltiges Gas zuführt.

17. Verfahren nach Anspruch 16, **dadurch gekennzeichnet, dass** man den Sauerstoffgehalt in den Abwässern auf größer oder gleich 2 mg je Liter Abwasser einstellt.

18. Verfahren nach einem der vorstehenden Ansprüche, **dadurch gekennzeichnet, dass** als feinteilige kohlenstoffhaltige Trägersubstanz Aktivkohle, Braunkohlenkoks, Koksstaub, Anthrazit, Graphit und/oder Ruß verwendet wird.

19. Verfahren nach einem der vorstehenden Ansprüche, **dadurch gekennzeichnet, dass** der Oberflächen-pH-Wert auf etwa 6,5 bis 8 eingestellt wird.

20. Verfahren nach einem der vorstehenden Ansprüche, **dadurch gekennzeichnet, dass** man die Nitrifikation bei einer Raumbelastung von etwa 0,5 bis 2,5, vorzugsweise von etwa 1,0 bis 1,5 kg NH4-Stickstoff pro $m^3$ Abwasser und Tag durchführt.

21. Verfahren nach einem der vorstehenden Ansprüche, **dadurch gekennzeichnet, dass** man die organische Kohlenstofffracht des Abwassers, bestimmt als chemischer Sauerstoffbedarf (CSB) vor der Nitrifikationsstufe auf etwa 300 bis 1000, vorzugsweise auf etwa 300 bis 500 mg/Liter herabsetzt.

22. Verfahren nach einem der vorhergehenden Ansprüche, **dadurch gekennzeichnet, dass** man den NH4-Stickstoffgehalt vor der Nitrifikationsstufe auf einen Maximalwert von etwa 1200, vorzugsweise von etwa 700 mg/Liter begrenzt.

**Claims**

1. A process for treating industrial waste water highly laden with ammonium, by treating the waste water with nitrifying micro-organisms (nitrifying bacteria) in the presence of a suspended carrier substance, wherein a silicate or finely divided carbon-containing carrier substance with a specific surface area of > $20m^2$/g, preferably > $50^2$/g, is added to the waste water and suspended therein, and the nitrified waste water is optionally subjected to a denitrication with denitrifying micro-organisms (denitrifying bacteria),
and wherein the silicate carrier substance has a swelling volume of approximately 5 to 80 ml/2g and the finely divided carbon-containing carrier substance has a surface pH value of approximately 6 to 9.

2. A process according to Claim 1, **characterised in that** a natural silicate carrier substance with a particle size of 95% by weight < 150 μm is used.

3. A process according to Claim 1 or 2, **characterised in that** industrial waste water with an $NH_4$ nitrogen content of approximately 200 to 2000 mg/litre, preferably approximately 400 to 1600 mg/litre, is used.

4. A process according to any one of Claims 1 to 3, **characterised in that** partial flows from the sludge treatment and/or supernatant water (turbid water) from the sludge treatment and/or waste dump leakage water are used.

5. A process according to any one of Claims 1 to 4, **characterised in that** a suspension of the silicate carrier substance previously innoculated with nitrifying bacteria is added to the waste water.

6. A process according to any one of Claims 1 to 5, **characterised in that** the denitrification is carried out under anoxic conditions, optionally with the supply of a carbon source.

7. A process according to any one of Claims 1 to 6, **characterised in that** ammonium-oxidising bacteria are used as nitrifying bacteria.

8. A process according to any one of Claims 1 to 7, **characterised in that** the silicate carrier substance is used in amounts of approximately 5 to 50 g/litre, preferably of approximately 15 g/litre.

9. A process according to any one of Claims 1 to 8, **characterised in that** a silicate carrier substance with a surface pH value of approximately 6 to 9 is used.

10. A process according to any one of Claims 1 to 9, **characterised in that** the silicate carrier substance has a cation-exchange capacity (IEC) of approximately 40 to 100 meq/100 g, preferably of approximately 50 to 80 meq/100 g.

11. A process according to any one of Claims 1 to 10, **characterised in that** the silicate carrier substance has a swelling volume of approximately 10 to 20 ml/2g.

12. A process according to any one of Claims 1 to 11, **characterised in that** clay minerals are used as the silicate carrier substance.

13. A process according to Claim 12, **characterised in that** smectitic clay minerals, in particular bentonite, are used as the clay minerals.

14. A process according to any one of Claims 1 to 13, **characterised in that** during the nitrification the pH values are adjusted to approximately 6.5 to 8.5, preferably to approximately 6.8 to 7.2, by the addition of alkali.

15. A process according to any one of Claims 1 to 14, **characterised in that** the silicate carrier substance is added in amounts of approximately 6 to 15 kg, preferably approximately 7.5 to 12 kg, per kg of nitrogen (total nitrogen) in the waste water.

16. A process according to any one of Claims 1 to 15, **characterised in that** the nitrification is carried out under aerobic conditions, preferably by supplying an oxygencontaining gas to the waste water.

17. A process according to Claim 16, **characterised in that** the oxygen content in the waste water is adjusted to ≥2 mg per litre of waste water.

18. A process according to any one of the preceding Claims, **characterised in that** activated carbon, lignite coke, coke dust, anthracite, graphite and/or carbon black are used as the finely divided carbon-containing carrier substance.

19. A process according to any one of the preceding Claims, **characterised in that** the surface pH value is adjusted to approximately 6.5 to 8.

20. A process according to any one of the preceding Claims, **characterised in that** the nitrification is carried out with a loading rate per unit volume of approximately 0.5 to 2.5, preferably approximately 1.0 to 1.5, kg $NH_4$ nitrogen per $m^3$ of waste water per day.

21. A process according to any one of the preceding Claims, **characterised in that** the organic carbon load of the waste water, determined as the chemical oxygen demand (COD) is reduced to approximately 300 to 1000, preferably to approximately 300 to 500 mg/litre, before the nitrification stage.

22. The process according to any one of the preceding Claims, **characterised in that** the $NH_4$ nitrogen content is limited to a maximum value of approximately 1200, preferably approximately 700 mg/litre, before the nitrification stage.

**Revendications**

1. Procédé pour le traitement, sur site, d'eaux résiduaires de fabrication fortement chargées en ammonium, par traitement des eaux résiduaires avec des microorganismes nitrifiants (nitrifiants) en présence d'une substance support en suspension, dans lequel on ajoute aux eaux résiduaires une substance support silicatée ou carbonée finement divisée ayant une aire spécifique supérieure à 20 $m^2$/g, de préférence supérieure à 50 $m^2$/g, et on les y met en suspension, et on soumet éventuellement les eaux résiduaires nitrifiées à une dénitrification à l'aide de microorganismes dénitrifiants (dénitrifiants),

et où la substance support silicatée a un volume de gonflement de 5 à 80 ml/2 g, et la substance support carbonée finement divisée a un pH superficiel d'environ 6 à 9.

2. Procédé selon la revendication 1, **caractérisé en ce qu'**on utilise une substance support silicatée naturelle ayant une granulométrie correspondant à 95 % en poids < 150 μm.

3. Procédé selon la revendication 1 ou 2, **caractérisé en ce qu'**on utilise des eaux résiduaires de fabrication ayant une teneur en azote de $NH_4$ d'environ 200 à 2000 mg/l, de préférence d'environ 400 à 1600 mg/l.

4. Procédé selon l'une des revendications 1 à 3, **caractérisé en ce qu'**on utilise en tant qu'eaux résiduaires des courants partiels provenant du traitement des boues et/ou des eaux surnageantes (eaux troubles) provenant du traitement des boues, et/ou des eaux d'infiltration des décharges.

5. Procédé selon l'une des revendications 1 à 4, **caractérisé en ce qu'**on ajoute aux eaux résiduaires une suspension, au préalable ensemencée par des nitrifiants, de la substance support silicatée.

6. Procédé selon l'une des revendications 1 à 5, **caractérisé en ce qu'**on met en oeuvre la dénitrification dans des conditions anoxiques, éventuellement avec apport d'une source de carbone.

7. Procédé selon l'une des revendications 1 à 6, **caractérisé en ce qu'**on utilise en tant que nitrifiants des bactéries d'oxydation de l'ammonium.

8. Procédé selon l'une des revendications 1 à 7, **caractérisé en ce qu'**on utilise la substance support silicatée en des quantités d'environ 5 à 50 g/litre, de préférence d'environ 15 g/litre.

9. Procédé selon l'une des revendications 1 à 8, **caractérisé en ce qu'**on utilise une substance support silicatée ayant un pH superficiel d'environ 6 à 9.

10. Procédé selon l'une des revendications 1 à 9, **caractérisé en ce que** la substance support silicatée a une capacité d'échange cationique (CEC) d'environ 40 à 100 mval/100 g, de préférence d'environ 50 à 80 mval/100 g.

11. Procédé selon l'une des revendications 1 à 10, **caractérisé en ce que** la substance support silicatée a un volume de gonflement de 10 à 20 ml/2 g.

12. Procédé selon l'une des revendications 1 à 11, **caractérisé en ce qu'**on utilise en tant que substance support silicatée des produits minéraux argileux.

**13.** Procédé selon la revendication 12, **caractérisé en ce qu'**on utilise en tant que produits minéraux argileux des produits minéraux argileux de type smectite, en particulier la bentonite.

**14.** Procédé selon l'une des revendications 1 à 13, **caractérisé en ce que**, lors de la nitrification, on ajuste les pH par addition d'une base à environ 6,5 à 8,5, de préférence à environ 6,8 à 7,2.

**15.** Procédé selon l'une des revendications 1 à 14, **caractérisé en ce que** l'on ajoute la substance support silicatée aux eaux résiduaires en des quantités d'environ 6 à 15 kg et de préférence d'environ 7,5 à 12 kg/kg d'azote (azote total).

**16.** Procédé selon l'une des revendications 1 à 15, **caractérisé en ce qu'**on met en oeuvre la nitrification dans des conditions aérobies, de préférence par amenée d'un gaz oxygéné aux eaux résiduaires.

**17.** Procédé selon la revendications 16, **caractérisé en ce qu'**on ajuste la teneur des eaux résiduaires en oxygène à des valeurs supérieures ou égales à 2 mg/litre d'eau résiduaire.

**18.** Procédé selon l'une des revendications précédentes, **caractérisé en ce qu'**on utilise en tant que substance support carbonée finement divisée du charbon actif, du coke de lignite, de la poussière de coke, de l'anthracite, du graphite et/ou du noir de carbone.

**19.** Procédé selon l'une des revendications précédentes, **caractérisé en ce qu'**on ajuste le pH superficiel à environ 6,5 à 8.

**20.** Procédé selon l'une des revendications précédentes, **caractérisé en ce qu'**on met en oeuvre la nitrification sous une charge volumique d'environ 0,5 à 2,5 et de préférence d'environ 1,0 à 1,5 kg d'azote de $NH_4$ par $m^3$ d'eau résiduaire et par jour.

**21.** Procédé selon l'une des revendications précédentes, **caractérisé en ce qu'**on abaisse à une valeur d'environ 300 à 1000 et de préférence d'environ 300 à 500 mg/litre la charge de carbone organique de l'eau résiduaire, exprimée par la demande chimique en oxygène (DCO) avant l'étape de nitrification.

**22.** Procédé selon l'une des revendications précédentes, **caractérisé en ce qu'**on limite à une valeur maximale d'environ 1200 et de préférence d'environ 700 mg/litre la teneur en azote de $NH_4$ avant l'étape de nitrification.